Europäisches Patentamt

European Patent Office

Office européen des brevets

(11) Publication number: **0 084 297**
**B1**

(12) **EUROPEAN PATENT SPECIFICATION**

(45) Date of publication of patent specification: **10.09.86**

(51) Int. Cl.⁴: **B 65 G 47/32**

(21) Application number: **82830265.3**

(22) Date of filing: **21.10.82**

(54) **Apparatus for conveying biscuits, and confectionery products in general, towards a wrapping machine.**

(30) Priority: **19.01.82 IT 1917982**

(43) Date of publication of application:
**27.07.83 Bulletin 83/30**

(45) Publication of the grant of the patent:
**10.09.86 Bulletin 86/37**

(84) Designated Contracting States:
**DE FR GB NL**

(56) References cited:
**DE-A-2 514 792**
**US-A-2 603 339**
**US-A-3 250 375**
**US-A-3 348 655**
**US-A-3 753 484**

(73) Proprietor: **CAVANNA S.p.A.**
**104, Via Matteotti**
**I-28077 Prato Sesia Novara (IT)**

(72) Inventor: **Francioni, Renzo**
**54, Via A. Volta**
**Grignasco Novara (IT)**

(74) Representative: **Perani, Aurelio et al**
**c/o JACOBACCI-CASETTA & PERANI S.p.A 7,**
**Via Visconti di Modrone**
**I-20122 Milano (IT)**

Courier Press, Leamington Spa, England.

EP 0 084 297 B1

## Description

The present invention relates to apparatus for conveying biscuits, and confectionery products in general, towards a wrapping machine.

These biscuits may be of various types, both with regard to the consistency of the mixture which may be quite crumbly, and to the possible presence of a filling and/or a coating, for example, a chocolate coating. In some cases they may also have granular coatings of, for example, almonds sprinkled on a coating of caramel or jam.

Now, there is a need to feed such biscuits to a wrapping machine where the biscuits are individually wrapped in cellophane. Such packages can then be handled easily in the further stages of the production cycle up to consumption.

According to the presently known technology, the conveying of articles is carried out by an apparatus which comprises a first conveyor belt with equally spaced partitions which define cells for individual articles and a pair of endless belts which extend along each side of the first conveyor belt at a higher level than the latter and support the article in the cells.

An example of such known apparatus is shown and described in the U.S. Patent specification No. 3,348,655.

The feeding of biscuits to a wrapping machine has, until now, encountered the contrasting needs of achieving a high rate of conveyance of the biscuits, as is clearly required in the large-scale production of widely consumed products, and at the same time minimising the percentage of biscuits damaged in conveyance; this is not only to avoid obvious wastage but also because damaged biscuits result in laborious operations for their removal.

These disadvantages are clearly greater the more the biscuits are valued for the preparation of the mixture, the filling, and/or the coating.

The problem behind the present invention is that of devising an apparatus of the type specified, which has such structural and functional characteristics as to satisfy the requirement explained in the preamble while overcoming the disadvantages mentioned.

This problem is solved by an apparatus as recited in the appended claims.

Further characteristics and advantages of the apparatus according to the present invention will emerge from the following description of a preferred embodiment given, by way of non-limiting example, with reference to the single appended drawing which is a schematic perspective view of apparatus according to the invention.

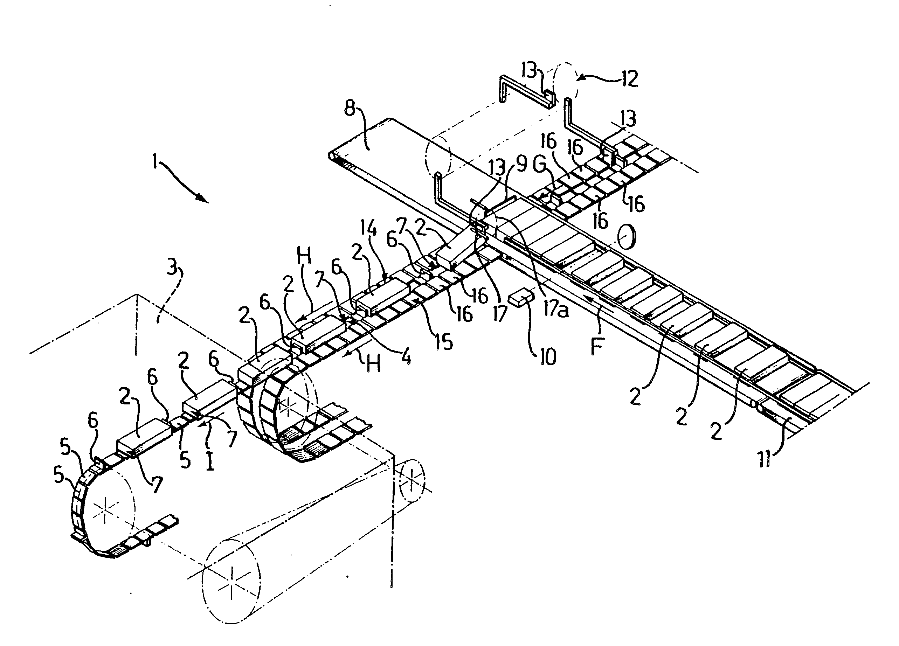

With reference to the appended drawing, there is generally indicated 1 apparatus for conveying biscuits, each indicated 2, towards an entirely conventional type of wrapping machine, generally indicated 3, in which the biscuits are individually wrapped in cellophane.

The apparatus 1 includes a first conveyor belt 4 formed from a succession of metal links 5 carrying partitions, each indicated 6, which are spaced equally along the belt 4 to form cells, each indicated 7, defined by adjacent partitions and intended to receive a respective biscuit 2. The belt 4 has a smaller width than the width of the biscuits 2. The distance between one partition and the next is fixed in dependence on the length of the biscuit to be wrapped in cellophane, and on the space necessary between one biscuit and the next for the heat-sealing of the cellophane between the biscuits in the wrapping machine 3.

The apparatus 1 further includes a second conveyor belt 8 which is supplied with biscuits 2 and extends above the first conveyor belt 4 at right angles thereto.

The belt 4 and the belt 8 are supported by a supporting frame of an entirely conventional type which is not shown so as not to over-burden the drawing.

A stop 9 is fixed to the frame and is located above the belt 8 in correspondence with the belt 4, to stop the biscuits 2 on the belt 8.

On a section between the stop 9 and a photocell 10 supported by the frame, the biscuits 2 are arranged on the belt 8 in a continuous line, that is, touching each other, while on the remaining section the biscuits 2 are generally spaced from each other. A further conveyor belt 11 is located upstream of the belt 8. The belt 11 is supplied with biscuits from a production unit, such as a baking oven or a unit in which the biscuits are, for example, coated with chocolate, and in its turn supplies the belt 8. In an entirely conventional manner, the photocell 10 controls the speed of the belt 11, such that the section between the stop 9 and the photocell 10 is always filled with a continuous line of biscuits 2. Guide strips are provided along the belts 8, 11 to guide the biscuits 2 laterally along these belts.

The apparatus 1 according to the invention further includes an endless chain conveyor 12 having a plurality of pusher blades 13, attached thereto at equal interval, the operative run of the chain conveyor extending above the second conveyor belt 8 in the direction of the first conveyor belt 4.

A pair of endless belts 14, 15 formed from metal links 16 extend laterally of the first conveyor belt 4 at a predetermined distance of, for example, a few millimetres above the latter, and are driven at a speed substantially equal to the speed of the pusher blades 13.

The first conveyor belt 4 has a pass which is prolonged relative to the belts 14, 15 and extends into the wrapping machine 3.

An eccentric striker 17 is located at the end of the operative run of the pusher blades 13 of the endless chain conveyor 12, this striker 17 having a circular trajectory in order to strike from above each biscuit conveyed by the pusher blades 13.

The operation of the apparatus 1 according to the invention is described below.

As they bear against the stop 9, the biscuits 2 in the line of biscuits on the second conveyor belt 8, which advances in the direction of the arrow F, are displaced transversely one at a time by the pusher blades 13, which advance in the direction of arrow G, until they leave the second conveyor belt 8 laterally. They fall from there onto the endless belts 14, 15 which advance in the direction of the arrow H at a speed substantially equal to that of the pusher blades 13. The fall and, in particular, the detachment of each biscuit 2 from the pusher blade 13 which has displaced it are facilitated by the eccentric striker 17 which, driven in phase with the pusher blades, strikes each biscuit 2 from above at the moment the pusher blade 13 reaches the limit of its own active pass. The first conveyor belt 4, which advances in the direction of arrow I, is also driven in phase with the pusher blades 13 so that each biscuit falls from the second conveyor belt 8 into a cell 7.

Each biscuit is thus conveyed by the first conveyor belt 4 to the wrapping machine where it is wrapped in cellophane.

In the apparatus according to the invention, each biscuit is subjected individually to the forces necessary for its conveyance and, from the second conveyor belt 8 to the machine 3, is transported positively, first by the pusher blades 13 and then in the cells 7. This results in a minimum of damage to the biscuits, and avoids the accumulation of crumbs or particles which can become detached from the biscuits and may be sticky.

Moreover, from what has been described above, it is clear that the time in which each biscuit 2 is pressed against the stop 9 by the action of the second conveyor belt 8 and by the thrust of the other biscuits in the line may be reduced to very small values, practically eliminating any damage to the biscuits. Indeed, the speed of the pusher blades 13 may even be chosen so as to be quite high, without the biscuits 2 which are pushed by the pusher blades 13 towards the first conveyor belt 4 faltering at this point due to the excess relative speed, by virtue of the presence of the pair of endless belts 14, 15 which are at a higher level than the first conveyor belt 4 and have substantially the same speed as the pusher blades 13. Thus, it is possible to arrange the biscuits 2 on the first conveyor belt 4 at the desired rate for the wrapping machine 3 without damage to the biscuits.

By virtue of the apparatus according to the invention, the important advantage of a high rate of conveyance of the biscuits towards the wrapping machine is achieved without damage to the biscuits themselves.

## Claim

Apparatus for conveying biscuit and confectionery products towards a wrapping machine comprising a first conveyor belt (4) with equally spaced partitions (6) which define cells (7) for individual products (2) and a pair of endless belts (14, 15) which extend along each side of the first conveyor belt (4) at a higher level than the latter and support the products (2) in the cells (7), characterized by the fact that it includes a second conveyor belt (8) extending above the first conveyor belt (4) at right angle thereto, an endless chain conveyor (12) having a plurality of pusher blades (13) attached thereto at equal intervals, the operative run of said pusher blades (13) extending above said second conveyor belt (8) in the direction of the first conveyor belt (4) for displacing each product (2) from the second conveyor belt (8) into a cell (7) of the first conveyor belt (4), and an eccentric striker (17) located at the end of the operative run of the pusher blades (13) to strike from above each product (2) conveyed by each pusher blade (13).

## Patentanspruch

Vorrichtung zum Fördern von Biskuits und Konfektprodukten zu einer Einwickelmaschine, bestehend aus einem ersten Förderband (4) mit in gleichem Abstand angeordneten Teilwänden (6), die Abteile (7) für Einzelprodukte (2) bilden sowie aus einem Paar von Endlösbandern (14, 15), die sich entlang jeder Seite des ersten Förderbandes (4) auf einem höheren Niveau als das letztere erstrecken und die Produkte (2) in den Abteilen (7) halten, dadurch gekennzeichnet, daß ein zweites Förderband (8) vorgesehen ist, das sich oberhalb des ersten Förderbandes (4) und rechtwinklig dazu erstreckt, daß ein endloser Kettenförderer (12) mit einer Vielzahl von Schieberplatten (13) vorgesehen ist, die an ihm in gleichen Abständen befestigt sind, daß das aktive Trum der Schieberplatten (13) sich oberhalb des zweiten Förderbandes (8) in der Richtung des ersten Förderbandes erstreckt, um jedes Produkt (2) vom zweiten Förderband (8) in ein Abteil (7) des ersten Förderbandes (4) zu verlagern und daß ein exzentrischer Anschlag (17) am Ende des aktiven Trums der Schieberplatten (13) angeordnet ist, der an jedes Produkt, das jeweils von einer Schieberplatte (13) gefördert wird, von oben anstößt.

## Revendication

Appareil pour le transport de biscuits et de produits de confiserie vers une machine d'emballage se composant d'un premier tapis roulant (4) avec parois divisoires (6) à distance régulière lesquelles définissent alvéoles (7) pour un seul produit (2), et d'un couple de courroies continues (14, 15) lesquelles s'étendent à chaque coté du premier tapis roulant (4) à un niveau plus élevé du premier et soutiennent les produits (2) dans les alvéoles (7), charactérisé en ce qu'il comprend un deuxième tapis roulant (8) étendu sur le premier tapis roulant (4) perpendiculairement à celui-ci, un transporteur à chaine continue ayant une pluralité de pelles à pousser montées sur celui-ci à distance régulière, le chemin outil des pelles (13) s'étendant sur le deuxième tapis roulant (8) dans la direction du premier tapis roulant (4) pour déplacer chaque produit (2) du deuxième tapis (8) dans un alvéole (7) du premier tapis et un frappeur excentrique (17) situé à la fin du chemin outil des pelles à pousser (13) pour frapper du haut chaque produit (2) poussé de chaque pelle à pousser (13).